(19) Europäisches Patentamt
European Patent Office
Office européen des brevets

(11) **EP 3 070 643 B1**

(12) **FASCICULE DE BREVET EUROPEEN**

(45) Date de publication et mention de la délivrance du brevet:
**29.09.2021 Bulletin 2021/39**

(51) Int Cl.:
***G06K 9/00*** *(2006.01)*

(21) Numéro de dépôt: **16161228.8**

(22) Date de dépôt: **18.03.2016**

(54) **PROCÉDÉ ET SYSTÈME DE RECONNAISSANCE D'OBJETS PAR ANALYSE DE SIGNAUX D'IMAGE NUMÉRIQUE D'UNE SCÈNE**

VERFAHREN UND SYSTEM ZUR OBJEKTERKENNUNG DURCH ANALYSE VON SIGNALEN EINES NUMERISCHEN BILDES EINER SZENE

METHOD AND DEVICE FOR OBJECT RECOGNITION BY ANALYSIS OF DIGITAL IMAGE SIGNALS REPRESENTATIVE OF A SCENE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.03.2015 FR 1500552**

(43) Date de publication de la demande:
**21.09.2016 Bulletin 2016/38**

(73) Titulaire: **THALES**
**92400 Courbevoie (FR)**

(72) Inventeurs:
• GOUDOU, Jean-François
**91767 PALAISEAU CEDEX (FR)**
• CRAYE, Céline
**91767 PALAISEAU CEDEX (FR)**
• FAGNO, Michaël
**91767 PALAISEAU CEDEX (FR)**

(74) Mandataire: **Lavoix**
**2, place d'Estienne d'Orves**
**75441 Paris Cedex 09 (FR)**

(56) Documents cités:
**US-A1- 2010 013 917**

• **FRANCK MOOSMANN ET AL: "Learning saliency maps for object categorization", INTERNATIONAL WORKSHOP ON THE REPRESENTATION AND USE OF PRIOR KNOWLEDGE IN VISION (IN ECCV '06), MAY 2006, GRAZ, AUSTRIA, 1 mai 2006 (2006-05-01), page 203726, XP55262981,**
• **None**

**Description**

La présente invention concerne un procédé de reconnaissance d'objets par analyse de signaux d'image numérique d'une scène et un système de reconnaissance d'objets associé.

L'invention se situe dans le domaine de la classification et de la reconnaissance d'objets à partir d'images et de vidéos, dans un contexte de prise de vues quelconque.

A l'heure actuelle, il existe des systèmes d'analyse d'images ou de vidéos, utilisant soit une ou plusieurs caméras fixes, soit une caméra orientable, appelée également caméra PTZ pour « pan-tilt-zoom », et des algorithmes de détection puis de classification sur les images acquises. De manière classique, de tels systèmes sont utilisés dans des contextes limités, comme par exemple dans le cas d'une application de vidéosurveillance à caméra fixe.

On connaît également des applications logicielles de reconnaissance de visages sur des photographies numériques, ou de classification de photographies numériques dans des catégories prédéfinies, par exemple portraits, paysages naturels, paysages urbains. Cependant, de telles applications sont limitées à une reconnaissance d'objets prédéfinis, en nombre limité.

Ainsi, les systèmes connus manquent de souplesse et ne sont pas facilement adaptables à l'application sur une plateforme autonome, apte à se déplacer, auquel cas l'acquisition d'images et/ou de vidéos se fait dans n'importe quel contexte, non connu à l'avance.

De plus, dans des applications de reconnaissance d'objets dans un contexte libre, le nombre de classes d'objets à reconnaître est très élevé, allant de plus d'une centaine à plusieurs milliers de classes. Dans de tels contextes, la détection et la reconnaissance de classes d'objets pose également un problème calculatoire.

Le document US 2010/013917 A1 décrit un procédé et un système de surveillance, qui comprend l'acquisition de la position d'un objet détecté en utilisant un premier capteur et l'orientation d'un deuxième capteur vers l'objet détecté.

L'article « Learning saliency maps for object categorization » de F. Moosmann et al, publié dans International Workshop on the Représentation and Use of Prior Knowledge in Vision, ECCV 2006, décrit plusieurs méthodes de calcul de cartes de saillance en lien avec la classification d'objets.

L'invention a pour objectif de remédier à certains problèmes rencontrés dans l'état de la technique, en proposant un système de reconnaissance d'objets dans leur environnement, adapté pour la reconnaissance de classes d'objets dans n'importe quel contexte, et pour un grand nombre de classes.

A cet effet, l'invention propose, selon un premier aspect, un procédé de reconnaissance d'objets tel que défini par la revendication 1 par analyse de signaux d'image numérique d'une scène, lesdits signaux d'image numérique étant acquis par un dispositif d'acquisition d'images monté sur un support comportant au moins un axe de rotation.

Le procédé comporte des étapes de :

- acquisition d'un premier signal d'image numérique de première résolution correspondant à un champ de vision large,
- calcul d'une carte de saillance à partir du premier signal d'image numérique, comprenant une étape préalable d'apprentissage de saillance visuelle d'un ensemble de classes d'objets d'intérêt prédéterminé, au moins une image d'objet de chaque classe étant mémorisée dans une base de données,
- détermination d'au moins une zone d'intérêt à partir de la carte de saillance calculée,
- orientation du dispositif d'acquisition d'images et acquisition d'un deuxième signal d'image numérique focalisé sur ladite zone d'intérêt, de deuxième résolution supérieure à la première résolution,
- détermination d'une classification d'objets d'une partie de la scène en utilisant le deuxième signal d'image numérique.

La détermination d'une classification d'objets de la scène comprend les sous-étapes suivantes :

- obtention d'un troisième signal d'image de résolution variable comprenant, dans une partie centrale, ledit deuxième signal d'image de deuxième résolution et une partie périphérique de première résolution,
- application d'un traitement d'image rétinien audit troisième signal d'image pour obtenir des données caractéristiques d'objets présents dans ledit troisième signal d'images,
- application d'une méthode de classification d'objets sur les données caractéristiques, parmi un ensemble de classes d'objets préalablement mémorisées.

Avantageusement, le procédé selon l'invention permet de combiner l'utilisation de signaux d'image numérique de plusieurs résolutions, et d'effectuer la détermination de classes d'objets en plusieurs étapes, ce qui permet de minimiser les ressources calculatoires utilisées. Le procédé de reconnaissance d'objets selon l'invention peut également présenter une ou plusieurs des caractéristiques ci-dessous, prises indépendamment ou en combinaison.

L'obtention d'un troisième signal d'image comprend, après orientation du dispositif d'acquisition d'images, des étapes de:

- obtention d'un signal d'image intermédiaire de première résolution correspondant à un champ de vision large, et
- fusion du deuxième signal d'image de deuxième résolution et dudit signal d'image intermédiaire, pour obtenir ledit troisième signal d'image.

L'étape de fusion met en œuvre une transformation sur le deuxième signal d'image.

Le calcul d'une carte de saillance comporte un calcul d'une pluralité de caractéristiques d'images parmi des caractéristiques de contraste d'intensité, de contraste de couleur et d'orientation.

La détermination d'au moins une zone d'intérêt à partir de la carte de saillance calculée comprend la détermination de valeurs de maxima locaux de la carte de saillance calculée et la détermination de zones d'intérêt, chaque zone d'intérêt étant centrée sur un maximum local de la carte de saillance.

Selon un mode de réalisation, le signal d'image numérique est représentatif d'une image fixe.

Selon un mode de réalisation, le signal d'image numérique est représentatif d'un flux vidéo.

Selon un deuxième aspect, l'invention propose un système de reconnaissance d'objets tel que défini par la revendication 8 par analyse de signaux d'image numérique d'une scène. Le système comporte un dispositif d'acquisition d'images monté sur un support comportant au moins axe de rotation, apte à coopérer avec une unité de traitement comportant un processeur, dans lequel :

- le dispositif d'acquisition est apte à acquérir un premier signal d'image numérique de première résolution correspondant à un champ de vision large,
- l'unité de traitement comporte :

  - un module de calcul d'une carte de saillance à partir du premier signal d'image numérique, mettant en œuvre, préalablement au calcul d'une carte de saillance, un apprentissage de saillance visuelle d'un ensemble de classes d'objets d'intérêt prédéterminé, au moins une image d'objet de chaque classe étant mémorisée dans une base de données,
  - un module de détermination d'au moins une zone d'intérêt à partir de la carte de saillance calculée,

- des moyens d'orientation du dispositif d'acquisition d'images et au moins une caméra d'acquisition d'un deuxième signal d'image numérique focalisé sur ladite zone d'intérêt, de deuxième résolution supérieure à la première résolution,
- l'unité de traitement comporte un module de détermination d'une classification d'objets d'une partie de la scène en utilisant le deuxième signal d'image numérique, adapté pour mettre en œuvre une obtention d'un troisième signal d'image de résolution variable comprenant, dans une partie centrale, ledit deuxième signal d'image de deuxième résolution et une partie périphérique de première résolution, une application d'un traitement d'image rétinien audit troisième signal d'image pour obtenir des données caractéristiques d'objets présents dans ledit troisième signal d'images, et une application d'une méthode de classification d'objets sur les données caractéristiques, parmi un ensemble de classes d'objets préalablement mémorisées.

Le système de reconnaissance d'objets selon l'invention peut également présenter une ou plusieurs des caractéristiques ci-dessous, prises indépendamment ou en combinaison.

Le dispositif d'acquisition d'images comporte une caméra d'acquisition d'images à contrôle de distorsion.

Le dispositif d'acquisition d'images comporte au moins une caméra d'acquisition d'images champ étroit et au moins une caméra d'acquisition d'images champ large.

D'autres caractéristiques et avantages de l'invention ressortiront de la description qui en est donnée ci-dessous, à titre indicatif et nullement limitatif, en référence aux figures annexées, parmi lesquelles :

- la figure 1 est un schéma représentant schématiquement un mode de réalisation d'un système de reconnaissance d'objets selon l'invention ;
- la figure 2 illustre une première variante de réalisation du dispositif d'acquisition d'images numériques selon l'invention ;
- la figure 3 illustre une deuxième variante de réalisation du dispositif d'acquisition d'images numériques selon l'invention ;
- la figure 4 illustre une troisième variante de réalisation du dispositif d'acquisition d'images numériques selon l'invention ;
- la figure 5 illustre schématiquement les modules fonctionnels d'une unité de traitement selon un mode de réalisation ;
- la figure 6 est un organigramme représentatif des étapes mises en œuvre par un procédé de reconnaissance d'objets selon un mode de réalisation de l'invention ;
- la figure 7 illustre schématiquement une image à résolution variable selon un mode de réalisation ;
- la figure 8 est un organigramme représentatif d'une fusion d'images selon un mode de réalisation de l'invention.

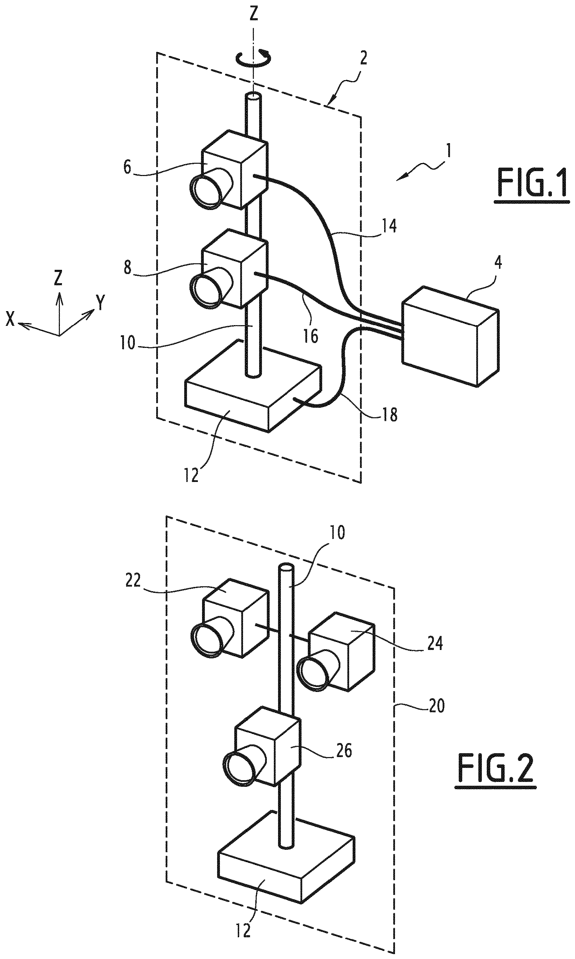

La figure 1 représente schématiquement un mode de réalisation d'un système de reconnaissance d'objets selon l'invention.

Le système de reconnaissance d'objets 1, qui effectue une reconnaissance par analyse de signaux d'images comporte un dispositif d'acquisition d'images numériques 2 et une unité de traitement 4, qui sont aptes à coopérer.

L'unité de traitement 4 est par exemple un ordinateur, ou tout autre dispositif muni de moyens de communication et d'une unité centrale de traitement ou processeur, apte à exécuter des instructions de code exécutable lorsque l'unité de traitement 4 est mise sous tension, et des moyens de stockage d'informations aptes à stocker des instructions de code exécutable.

Selon une variante, l'unité de traitement 4 est miniaturisée sous forme de carte programmée de type ASIC et intégrée dans le dispositif d'acquisition d'images numériques 2.

Il est à noter que le terme acquisition d'images numériques utilisé est à interpréter au sens large, donc étendu à la notion d'acquisition de vidéos. De même, le terme signal d'image numérique désigne à la fois un signal d'image fixe ou un flux vidéo.

Dans l'exemple de la figure 1, le dispositif d'acquisition de signaux d'images numériques 2 comprend deux caméras, référencées respectivement 6 et 8, fixées sur un élément de support 10, également appelé tourelle de support.

Chaque caméra est apte à acquérir des images fixes ou des vidéos comportant un nombre donné d'images par unité de temps.

Dans le premier mode de réalisation illustré à la figure 1, la caméra 8 est apte à capter des signaux d'image grand angle, correspondant à un champ de vision large, pour un angle horizontal de prise de vue de 60 degrés à 180 degrés, de première résolution $R_1$ d'environ 40 pixels par degré, ou plus généralement comprise entre 5 et 50 pixels par degré. Cette première résolution $R_1$ sera également appelée basse résolution.

La caméra 6 est apte à capter des signaux d'image champ étroit, pour un angle horizontal de prise de vue de l'ordre de 2,5 degrés, et de préférence compris entre 1 degré et 5 degrés, de deuxième résolution $R_2$ d'environ 770 pixels par degré, et plus généralement comprise entre 100 et 1000 pixels par degré. Cette deuxième résolution $R_2$ sera également appelée haute résolution.

Ainsi, le dispositif d'acquisition d'images numériques 2 permet d'obtenir, sensiblement simultanément, des images numériques de faible ou moyenne résolution et des images numériques haute résolution d'une même scène captée.

L'élément de support 10 est apte à tourner autour de son axe principal Z, sous la commande de moyens d'actionnement de rotation 12. De préférence, les moyens d'actionnement de rotation 12 sont motorisés et aptes à être commandés à distance.

De préférence, l'élément de support 10 est également adapté à tourner autour d'un deuxième axe Y, perpendiculaire à l'axe Z.

Avantageusement, les deux caméras sont orientées selon la même orientation grâce à leur fixation à l'élément de support 10, ce qui permet de capter, quasi simultanément, des images d'une même portion de la scène observée, selon une même orientation.

En variante, l'élément de support 10 est fixe et les caméras 6, 8 sont attachées à l'élément de support 10 par des liaisons pivot permettant de commander la rotation de chacune des caméras afin que l'axe optique de chacune des deux caméras soit pointé vers l'objet regardé, faisant ainsi un angle appelé angle de convergence. Dans le cas d'un objet « à l'infini », les deux axes optiques seraient ainsi parallèles.

Le dispositif d'acquisition d'images numériques 2 est connecté à l'unité de traitement 4, par des liaisons 14, 16, 18 de communication filaires ou sans fil.

Dans l'exemple de la figure 1, les moyens de transmission 14, 16, 18 sont des moyens filaires. En variante, une transmission sans fil, par exemple selon la technologie WiFi ou Bluetooth est mise en œuvre.

Grâce à cet agencement, les signaux d'images numériques acquis par les caméras 6, 8 sont transmis à l'unité de traitement 4. Egalement, l'unité de traitement 4 est apte à transmettre des commandes aux entités 6, 8, 12, par exemple pour commander l'orientation de l'élément de support 10 en fonction de l'analyse des signaux d'images numériques préalablement acquis.

La figure 2 illustre une première variante de réalisation du dispositif d'acquisition d'images numériques selon l'invention.

Dans ce mode de réalisation, le système d'acquisition d'images 20 comporte deux caméras 22, 24 haute résolution, pour la capture d'images en champ étroit, et une caméra 26 basse résolution, pour la capture d'images en champ large. Les éléments de support 10 et d'actionnement de rotation 12 sont analogues à ceux décrits ci-dessus.

De préférence, les caméras 22, 24 sont positionnés symétriquement par rapport à l'axe Z de l'élément de support 10, et sur un même axe horizontal X.

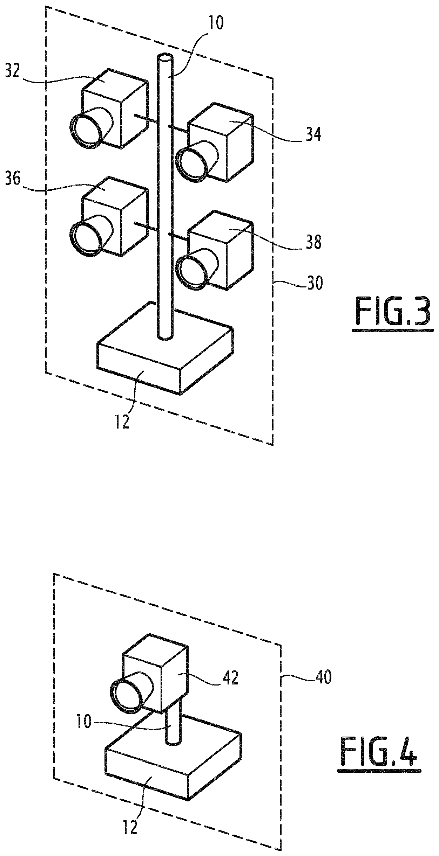

La figure 3 illustre une deuxième variante de réalisation du dispositif d'acquisition d'images numériques selon l'invention.

Dans ce mode de réalisation, le système d'acquisition d'images 30 comporte deux caméras 32, 34 haute résolution, pour la capture d'images en champ étroit, et deux caméras 36, 38 basse résolution, pour la capture d'images en champ large. Les éléments de support 10 et d'actionnement de rotation 12 sont analogues à ceux décrits ci-dessus.

De préférence, les caméras 32, 34 sont positionnés symétriquement par rapport à l'axe Z de l'élément de support 10, et sur un même axe horizontal X. De même, de préférence, les caméras 36, 38 sont positionnés symétriquement par rapport à l'axe Z de l'élément de support 10, et sur un même axe horizontal X.

La figure 4 illustre une troisième variante de réalisation du dispositif d'acquisition d'images numériques selon l'invention.

Dans ce mode de réalisation, le dispositif d'acquisition d'images numériques 40 comporte une seule caméra, comportant une optique à contrôle de distorsion, permettant d'obtenir simultanément une haute résolution $R_2$ dans une partie centrale de l'image ou de la vidéo acquise et une faible résolution $R_1$ sur les bords d'une l'image ou de la vidéo acquise.

Il est à noter que les moyens d'actionnement 12 sont représentés schématiquement, et que tout autre type de liaison mécanique et électrique entre les moyens d'actionnement 12 et l'élément de support 10 est envisageable, afin de permettre l'orientation selon toutes directions spatiales de la ou des caméras liées mécaniquement électriquement à l'élément de support.

Ainsi, le dispositif d'acquisition d'images selon l'invention permet à la fois la capture grand angle pour un champ de vision large d'une scène quelconque et la focalisation, avec centrage sur une ou des zones d'intérêt détectées et acquisition d'images haute résolution centrées sur ces zones d'intérêt, tout en acquérant des images champ large de la scène.

Ainsi, le dispositif d'acquisition d'images selon l'invention permet la focalisation sur des zones d'intérêt, l'acquisition d'images haute résolution de zones d'intérêt et d'images de contexte basse résolution des scènes en périphérie des zones d'intérêt.

Il est à noter qu'avantageusement, le dispositif d'acquisition d'images selon l'invention peut être positionné sur tout type de plateforme, par exemple une plateforme fixe de vidéosurveillance ou une plateforme mobile, de type robot autonome.

Ce dispositif d'acquisition d'images 2, 20, 30, 40 est apte à communiquer avec et à recevoir des commandes de l'unité de traitement 4, qui peut également soit être intégrée dans la plateforme sur laquelle est positionné le dispositif d'acquisition d'images, ou à distance, dans un centre de commande.

L'orientation du dispositif d'acquisition d'images se fait en fonction d'une analyse d'images champ large acquises et de la détection de zones d'intérêt par traitement d'images, appliqué par l'unité de traitement 4.

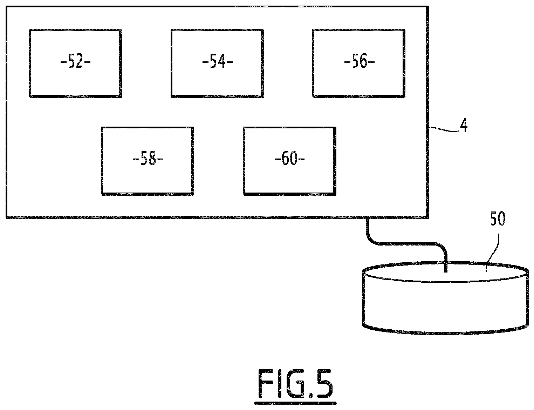

L'unité de traitement 4 est apte à implémenter des modules logiciels de traitement d'images, schématiquement illustrés à la figure 5.

L'unité de traitement 4 comporte ou a accès à une base de données 50 dans laquelle sont mémorisées des caractéristiques, par exemple des images numériques, des classes d'objets $C_1...C_N$ d'objets à reconnaître.

Par exemple, pour des environnements naturels et urbains, les classes incluent, sans limitation, des objets constitutifs du paysage, e.g. arbres, plantes, ciel, rivière, nuages, des éléments urbains, e.g. bâtiments, véhicules, routes, panneaux de signalisation, mobilier urbain, ainsi que piétons, animaux etc.

Bien évidemment, chacune des classes mentionnées peut se décliner en un grand nombre de sous-classes, permettant par exemple de distinguer divers types de véhicules etc.

Dans un mode de réalisation, le nombre N de classes d'objets à reconnaître est très grand, par exemple supérieur ou égal à 1000.

Dans un mode de réalisation, pour chaque classe d'objets, au moins une image numérique d'un objet représentatif de la classe est mémorisée dans la base de données 50.

L'unité de traitement 4 comprend un module 52 d'obtention des signaux d'images numériques du dispositif d'acquisition d'images, un module 54 d'analyse d'images et de calcul de carte de saillance, un module 56 de détermination d'une ou plusieurs zones d'intérêt à partir de la ou des cartes de saillance calculées.

L'unité de traitement 4 comprend, optionnellement, un module 58 de fusion d'images numériques de première résolution $R_1$ et de deuxième résolution $R_2$, qui est mis en œuvre lorsque le dispositif d'acquisition d'images comporte au moins deux caméras distinctes pour l'acquisition d'images haute résolution $R_2$ d'une part et basse résolution $R_1$ d'autre part, afin d'obtenir une seule image fusionnées comportant une partie haute résolution centrale correspondant à la zone d'intérêt et une partie basse résolution périphérique.

De plus, l'unité de traitement 4 comprend un module 60 de détermination de classification d'objets de la scène, en particulier d'objets situés dans la zone d'intérêt.

Le système de reconnaissance d'objets selon l'invention est applicable dans plusieurs scénarios d'application.

Selon un premier scénario d'application, le système de reconnaissance est appliqué pour la détection et la reconnaissance d'objets appartenant à des classes prédéterminées, éventuellement partiellement occultés, dans un contexte d'acquisition.

Les objets recherchés sont appelés objets d'intérêt, et des informations relatives aux objets d'intérêt sont mémorisées dans la base de données 50.

Selon un deuxième scénario d'application, le système de reconnaissance est appliqué pour la détection et la reconnaissance de n'importe quel objet de la base de données 50.

Selon un troisième scénario d'application, le système de reconnaissance est appliqué pour la détection d'objets inconnus mais présentant des caractéristiques physiques similaires aux objets de la base de données 50 : couleur, texture, forme, dimensions.

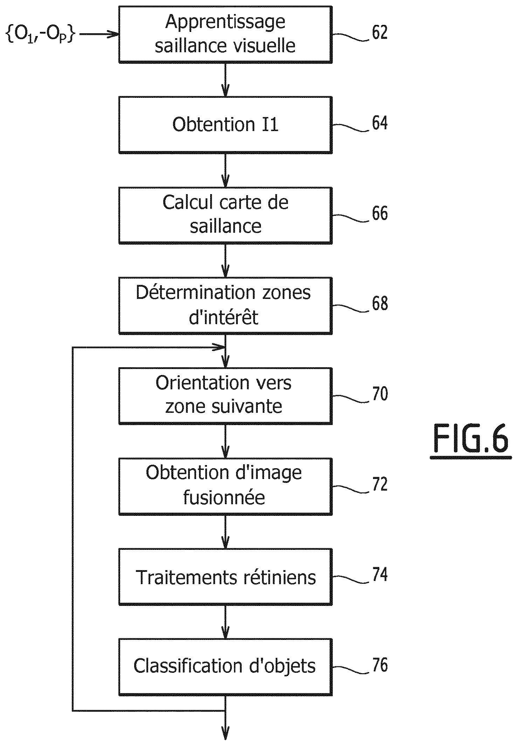

La figure 6 est un organigramme représentatif des étapes mises en œuvre par un procédé de reconnaissance d'objets selon un mode de réalisation de l'invention. Les étapes du procédé sont mises en œuvre par un processeur d'une unité de traitement 4.

Le procédé comprend une première étape préliminaire 60 d'apprentissage de la saillance visuelle d'objets appartenant à des classes d'objets $\{O_1,..,O_P\}$ de la base de données 50.

Selon un mode de réalisation, l'ensemble de classes d'objets est déterminé par un opérateur ou en fonction d'un contexte applicatif.

Selon une variante, l'ensemble de classes d'objets comprend la totalité des objets de la base de données 50.

La saillance visuelle représente la probabilité de présence d'un de ces objets dans une image de première résolution $R_1$, champ large.

Dans un mode de réalisation, l'apprentissage de la saillance visuelle comporte les sous-étapes suivantes :

- une acquisition d'une image champ large d'une scène et la sélection d'une portion de l'image acquise,
- une mesure de caractéristiques de saillance sur cette portion d'image. De préférence, l'agorithme proposé par Itti et al, dans l'article « A Model of Saliency-based Visual Attention for Rapid Scene Analysis », publié dans IEEE Transactions on Pattern Analysis and Machine Intelligence, édition de novembre 1998, pages 1254-1259 est appliqué.

Dans cet algorithme, il est proposé de calculer 42 cartes de caractéristiques par portion d'image, comportant des caractéristiques de contraste d'intensité, de contraste de couleur et d'orientation.

- une annotation manuelle de présence ou d'absence d'objets des classes $\{O_1,..,O_P\}$ sur cette même portion d'image, fournie par un opérateur, permettant d'associer des labels aux pixels ou à des zones de la portion d'image ;
- un apprentissage de la saillance à partir des caractéristiques d'images et des labels annotés, par exemple en utilisant un algorithme de forêts aléatoires, tel que décrit par L. Breiman en 2001 dans l'article "Random Forests", Machine Learning 45 (1): pages 5-32. Il est à noter qu'on peut utiliser des bibliothèques de programmes pour l'implémentation d'un tel algorithme, par exemple OpenCV ou le package RandomForest de R.

Il est à noter que le calcul des caractéristiques de saillance selon l'algorithme de Itti et al a été cité à titre d'exemple, toutes variantes à la portée de l'homme du métier étant applicables, notamment faisant varier le nombre de caractéristiques dans chaque catégorie de caractéristiques et les paramètres mis en œuvre pour définir ces caractéristiques.

En variante, lorsque les signaux d'image acquis sont des signaux vidéo, des caractéristiques de mouvement ou d'évolution temporelle en plus des caractéristiques de contraste de couleur, d'intensité et d'orientation sont utilisées.

La relation entre caractéristiques de saillance et saillance visuelle des objets des classes $\{O_1,..,O_P\}$ est mémorisée dans une mémoire de l'unité de traitement 4, pour utilisation ultérieure.

L'étape préalable d'apprentissage de la saillance visuelle 62 est suivie d'une étape 64 d'acquisition et d'obtention, dans l'unité de traitement 4, d'un premier signal d'image champ large $I_1$.

Un calcul de carte de saillance est ensuite appliqué à l'étape de calcul de carte de saillance 66, prenant en compte les classes d'objets $\{O_1,..,O_P\}$ définissant les objets d'intérêt de la scène.

Selon un mode de réalisation, l'étape 66 utilise un algorithme de forêts aléatoires pour apprendre les caractéristiques de saillance correspondant à la présence ou à l'absence des objets d'après une annotation manuelle. Les forêts aléatoires ainsi obtenues fournissent, lorsqu'on leur présente une nouvelle image de caractéristiques de saillance, une image de même taille comprenant en chaque pixel la probabilité de présence d'un ou plusieurs des objets appartenant aux classes d'objets d'intérêt $\{O_1,..,O_P\}$.

La carte de saillance calculée est une image de même taille que le premier signal d'image $I_1$, et comprend des valeurs représentatives de la probabilité de présence estimée d'un ou plusieurs des objets appartenant aux classes d'objets d'intérêt $\{O_1,..,O_P\}$.

De préférence, plus les valeurs des pixels de la carte de saillance sont élevées, plus la probabilité de présence d'un des objets d'intérêt est élevée.

L'étape 66 de calcul de la carte de saillance est suivie d'une étape 68 de détermination de zones d'intérêt de la scène, qui sont des zones comportant des maxima locaux de la carte de saillance.

La probabilité de détecter des objets d'intérêt dans les zones d'intérêt est élevée.

Selon un mode de réalisation, l'étape 68 comprend le calcul des maxima locaux de la carte de saillance et la détermination de la position spatiale dans la carte de saillance des maxima locaux. De préférence, les maxima locaux sont ordonnancés dans l'ordre décroissant des valeurs de la carte de saillance, afin de déterminer un ordre de traitement.

Une zone d'intérêt est, dans un mode de réalisation, réduite à un maximum local de la carte de saillance, qui est également le point central de la zone d'intérêt.

L'étape de détermination de zones d'intérêt 68 est suivie d'une étape 70 de commande d'orientation du dispositif d'acquisition vers le centre d'une zone d'intérêt déterminée.

Dans le mode de réalisation préféré, les zones d'intérêt sont considérées dans l'ordre décroissant des valeurs de maxima locaux.

Par suite à cette orientation du dispositif d'acquisition d'images, celui-ci acquiert un deuxième signal d'image champ étroit, focalisé sur le centre de la zone d'intérêt, de haute résolution $R_2$.

En outre, le dispositif d'acquisition d'images acquiert une image champ large de la portion périphérique de la scène entourant l'image haute résolution.

Une étape 72 d'obtention d'un troisième signal d'image de haute résolution centrale et de basse résolution en périphérie est ensuite mise en œuvre.

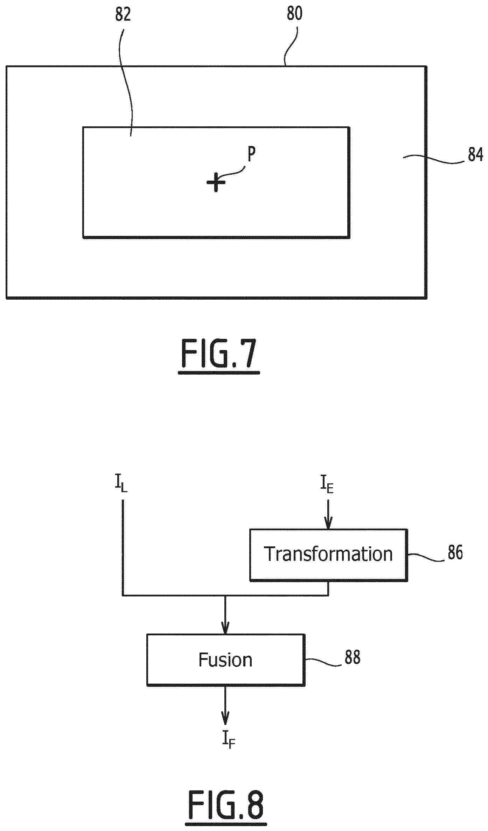

La figure 7 illustre schématiquement un tel troisième signal d'image ou image fusionnée 80, comportant une partie centrale 82 comportant un signal d'image haute résolution (résolution $R_2$) et une partie périphérique de résolution $R_3$, inférieure à $R_2$.

Dans le mode de réalisation préféré, la portion périphérique est à la résolution $R_1$ (basse résolution) des images acquises par la ou les caméras à champ de vision large.

La partie centrale 82 est centrée en un point P qui est le centre de la zone d'intérêt déterminée préalablement.

Dans le cas où le dispositif d'acquisition d'images comporte une seule caméra à contrôle de distorsion, ce troisième signal d'image est obtenu directement.

Dans le cas où le dispositif d'acquisition comporte plusieurs caméras, l'étape 72 d'obtention d'un troisième signal d'image comporte une fusion d'images acquises respectivement par la ou les caméras champ et étroit et par la ou les caméras champ large, dont un mode de réalisation est décrit en détail ci-après, en référence à la figure 8.

L'étape 72 est suivie d'une étape 74 d'application de traitements rétiniens sur le troisième signal d'image obtenu.

En variante, les traitements rétiniens sont appliqués directement au deuxième signal d'image haute résolution $R_2$ acquise par une caméra champ étroit ou obtenue par combinaison des images acquises par plusieurs caméras champ étroit, selon le type de dispositif d'acquisition d'images utilisé.

Les algorithmes de traitement rétiniens sont connus dans le domaine du traitement d'images. Il existe des algorithmes parvocellulaires, consistant à détecter contours et détails et des algorithmes magnocellulaires, consistant à détecter principalement des mouvements. Les traitement rétiniens de signaux d'images numériques s'inspirent du fonctionnement de la vision et fournissent des flux de données similaires à ceux transmis par le nerf optique vers le reste du cerveau humain. On les appelle également traitement biomimétiques.

Selon un mode de réalisation, on utilise la bibliothèque logicielle OpenCV Retina ®, accessible sur Internet, pour la mise en œuvre de traitements rétiniens.

Les données caractéristiques des objets présents dans le troisième signal d'image obtenues en sortie des applications des traitements parvocellulaires et magnocellulaires sont ensuite fournies en entrée d'un algorithme de classification d'objets 76.

De préférence, la classification des objets présents dans le troisième signal d'image dans les classes préalablement mémorisées est effectuée en utilisant des modèles d'apprentissage des données caractéristiques des classes d'objets, de type « deep learning », mis en œuvre sur la base de données d'objets 50.

Par exemple, les modèles utilisés sont ceux implémentés dans la bibliothèque ConvNet « Deep Convolutional Networks », accessible à l'adresse Internet http://libccv.org/doc/doc-convnet/.

Dans le mode de réalisation décrit, les classes d'objets d'intérêt {$O_1$,..,$O_P$} sont considérées.

En sortie de l'étape 76, on obtient la localisation spatiale ou spatio-temporelle des objets appartenant aux classes d'objet d'intérêt {$O_1$,..,$O_P$} dans le troisième signal d'image.

Cette localisation spatio-temporelle est ensuite reportée dans le premier signal d'image grand angle, ou exploitée pour une application comme par exemple une poursuite de cible. En particulier la classe de l'objet est associée à la direction de l'axe optique du système, ce qui fournit une information géométrique sur la localisation de l'objet exploitée par un opérateur ou par la plateforme mobile pour une action : déplacement, évitement, saisie de l'objet par exemple.

Les zones d'intérêt étant classifiées selon l'ordre des valeurs de saillance, les étapes 70 à 76 sont répétées pour la zone d'intérêt suivante, jusqu'à traitement complet de toutes les zones d'intérêt correspondant à des maxima locaux de la carte de saillance comme expliqué ci-dessus.

La figure 8 décrit un mode de réalisation de la fusion d'images acquises respectivement par la ou les caméras champ large et étroit.

En entrée, on dispose d'une image intermédiaire champ large IL et d'une image champ étroit $I_E$. Le positionnement spatial relatif des caméras d'acquisition est connu, et le décalage horizontal et/ou vertical est connu, donc on suppose que les images $I_L$ et $I_E$ sont centrées en un même point du paysage.

Lors d'une étape de transformation 86, on applique une transformation à l'image $I_E$ pour réduire progressivement la résolution sur les 500 pixels aux bords de l'image $I_E$. De manière plus générale, on considère un nombre prédéterminé Q de pixels de bord de l'image $I_E$, le nombre Q étant compris entre 100 et 700 pour une image de résolution 1024x768 à 1920x1080. On obtient une image l'$_E$.

La transformation appliquée met en œuvre un rayon *p* :

$$\rho = \frac{\rho_f}{\frac{1-\mu}{1+e^{\left(\frac{\rho_f}{29,7}-9\right)}}+\mu}$$

Où $\rho_f$ est le rayon dans l'image champ étroit $I_E$ et $\mu$ est le ratio entre les champs visuels perçus par un pixel de l'image champ étroit et de l'image champ large.

L'image l'$_E$ est obtenue par mapping : chaque pixel de l'$_E$ est une copie d'un pixel de $I_E$, le choix dudit pixel étant calculé en fonction de son rayon *p* selon la formule précédente.

Ensuite, l'image $I_L$ et l'image l'$_E$ sont fusionnées lors d'une étape 88, par exemple en effectuant un second mapping. Au centre l'image l'$_E$ est inchangée, à la périphérie les pixels de la nouvelle image sont des copies des pixels de $I_L$ ayant subi une translation par rapport au centre de l'image d'une valeur correspondant au rayon maximal de l'$_E$.

L'invention a été décrite ci-dessus plus particulièrement dans le cas où la classification est effectuée pour un ensemble de classes d'objets d'intérêt {$O_1$,..,$O_P$}.

Plus généralement, dans le deuxième scénario d'application du système de reconnaissance selon l'invention, il n'y a pas de connaissance préalable des objets recherchés, donc toutes les classes d'objets de la base de données 50 sont considérées.

## Revendications

1. Procédé de reconnaissance d'objets par analyse de signaux d'image numérique d'une scène, lesdits signaux d'image numérique étant acquis par un dispositif d'acquisition d'images monté sur un support comportant au moins un axe de rotation, **caractérisé en ce qu'**il comporte des étapes de :

   - acquisition (64) d'un premier signal d'image numérique de première résolution correspondant à un champ de vision large,
   - calcul (66) d'une carte de saillance à partir du premier signal d'image numérique, comprenant une étape préalable d'apprentissage de saillance visuelle (62) d'un ensemble de classes d'objets d'intérêt prédéterminé, au moins une image d'objet de chaque classe étant mémorisée dans une base de données,
   - détermination (68) d'au moins une zone d'intérêt à partir de la carte de saillance calculée,
   - orientation (70) du dispositif d'acquisition d'images et acquisition d'un deuxième signal d'image numérique focalisé sur ladite zone d'intérêt, de deuxième résolution supérieure à la première résolution,
   - détermination (72, 74, 76) d'une classification d'objets d'une partie de la scène en utilisant le deuxième signal d'image numérique, la détermination d'une classification d'objets de la scène comprenant les sous-étapes suivantes :

      - obtention (72) d'un troisième signal d'image de résolution variable comprenant, dans une partie centrale, ledit deuxième signal d'image de deuxième résolution et une partie périphérique de première résolution,
      - application (74) d'un traitement d'image rétinien audit troisième signal d'image pour obtenir des données caractéristiques d'objets présents dans ledit troisième signal d'images,
      - application (76) d'une méthode de classification d'objets sur les données caractéristiques, parmi un ensemble de classes d'objets préalablement mémorisées.

2. Procédé de reconnaissance d'objets selon la revendication 1, dans lequel l'obtention d'un troisième signal d'image comprend, après orientation (70) du dispositif d'acquisition d'images, des étapes de:

   - obtention d'un signal d'image intermédiaire de première résolution correspondant à un champ de vision large, et
   - fusion (86, 88) du deuxième signal d'image de deuxième résolution et dudit signal d'image intermédiaire, pour obtenir ledit troisième signal d'image.

3. Procédé de reconnaissance d'objets selon la revendication 2, dans lequel l'étape de fusion met en œuvre une transformation (86) sur le deuxième signal d'image.

4. Procédé de reconnaissance d'objets selon l'une quelconque des revendications 1 à 3, dans lequel le calcul (66) d'une carte de saillance comporte un calcul d'une pluralité de caractéristiques d'images parmi des caractéristiques de contraste d'intensité, de contraste de couleur et d'orientation.

5. Procédé de reconnaissance d'objets selon l'une quelconque des revendications 1 à 4, dans lequel la détermination (68) d'au moins une zone d'intérêt à partir de la carte de saillance calculée comprend

   - la détermination de valeurs de maxima locaux de la carte de saillance calculée et la détermination de zones d'intérêt, chaque zone d'intérêt étant centrée sur un maximum local de la carte de saillance.

6. Procédé de reconnaissance d'objets selon l'une quelconque des revendications 1 à 5, **caractérisé en ce qu'**un signal d'image numérique est représentatif d'une image fixe.

7. Procédé de reconnaissance d'objets selon l'une quelconque des revendications 1 à 5, **caractérisé en ce qu'**un signal d'image numérique est représentatif d'un flux vidéo.

8. Système de reconnaissance d'objets par analyse de signaux d'image numérique d'une scène, **caractérisé en ce qu'**il comporte un dispositif d'acquisition d'images (2, 20, 30, 40) monté sur un support (10) comportant au moins axe de rotation, apte à coopérer avec une unité de traitement (4) comportant un processeur, dans lequel :

   - le dispositif d'acquisition (2) est apte à acquérir un premier signal d'image numérique de première résolution correspondant à un champ de vision large,
   - l'unité de traitement (4) comporte :

      - un module (54) de calcul d'une carte de saillance à partir du premier signal d'image numérique, mettant en œuvre, préalablement au calcul d'une carte de saillance, un apprentissage de saillance visuelle d'un ensemble de classes d'objets d'intérêt prédéterminé, au moins une image d'objet de chaque classe étant mémorisée dans une base de données,
- un module (56) de détermination d'au moins une zone d'intérêt à partir de la carte de saillance calculée,

- des moyens (12) d'orientation du dispositif d'acquisition d'images et au moins une caméra d'acquisition d'un deuxième signal d'image numérique focalisé sur ladite zone d'intérêt, de deuxième résolution supérieure à la première résolution,
- l'unité de traitement (4) comporte un module (60) de détermination d'une classification d'objets d'une partie de la scène en utilisant le deuxième signal d'image numérique, adapté pour mettre en œuvre une obtention d'un troisième signal d'image de résolution variable comprenant, dans une partie centrale, ledit deuxième signal d'image de deuxième résolution et une partie périphérique de première résolution, une application d'un traitement d'image rétinien audit troisième signal d'image pour obtenir des données caractéristiques d'objets présents dans ledit troisième signal d'images, et une application d'une méthode de classification d'objets sur les données caractéristiques, parmi un ensemble de classes d'objets préalablement mémorisées.

**9.** Système de reconnaissance d'objets selon la revendication 8, dans lequel le dispositif d'acquisition d'images (40) comporte une caméra d'acquisition (42) d'images à contrôle de distorsion.

**10.** Système de reconnaissance d'objets selon la revendication 8, dans lequel le dispositif d'acquisition d'images (2, 20, 30) comporte au moins une caméra d'acquisition d'images (6, 22, 24, 32, 34) champ étroit et au moins une caméra d'acquisition d'images (8, 26, 36, 38) champ large.

**Patentansprüche**

**1.** Verfahren zum Erkennen von Objekten durch Analysieren von digitalen Bildsignalen einer Szene, wobei die digitalen Bildsignale von einer Bilderfassungsvorrichtung erfasst werden, die auf einem Träger montiert ist, der mindestens eine Drehachse aufweist, **dadurch gekennzeichnet, dass** es die Schritte aufweist des:

- Erfassens (64) eines ersten digitalen Bildsignals mit einer ersten Auflösung, die einem breiten Sichtfeld entspricht,
- Berechnens (66) einer Salienzkarte aus dem ersten digitalen Bildsignal, umfassend einen vorherigen visuellen Salienz-Lernschritt (62) eines Satzes von vorbestimmten Klassen von Objekten von Interesse, wobei mindestens ein Objektbild jeder Klasse in einer Datenbank gespeichert ist,
- Bestimmens (68) mindestens eines Bereichs von Interesse aus der berechneten Salienzkarte,
- Ausrichtens (70) der Bilderfassungsvorrichtung und Erfassens eines zweiten digitalen Bildsignals, das auf die Zone von Interesse fokussiert ist, mit einer zweiten Auflösung, die höher ist als die erste Auflösung,
- Bestimmens (72, 74, 76) einer Klassifizierung von Objekten eines Teils der Szene unter Verwendung des zweiten digitalen Bildsignals, wobei das Bestimmen einer Klassifizierung von Objekten der Szene die folgenden Teilschritte umfasst:

- Gewinnen (72) eines dritten Bildsignals mit variabler Auflösung, das in einem mittleren Bereich das zweite Bildsignal mit zweiter Auflösung und einen peripheren Bereich mit erster Auflösung enthält,
- Anwenden (74) einer Netzhautbildverarbeitung auf das dritte Bildsignal, um charakteristische Daten von Objekten zu erhalten, die in dem dritten Bildsignal vorhanden sind,
- Anwenden (76) eines Objektklassifizierungsverfahrens auf die Merkmalsdaten aus einer Menge von zuvor gespeicherten Objektklassen.

**2.** Verfahren zum Erkennen von Objekten nach Anspruch 1, bei dem die Gewinnung eines dritten Bildsignals nach der Ausrichtung (70) der Bilderfassungsvorrichtung die Schritte umfasst des:

- Erhaltens eines Zwischenbildsignals erster Auflösung, das einem breiten Sichtfeld entspricht, und
- Zusammenführens (86, 88) des Bildsignals der zweiten Auflösung und des Zwischenbildsignals, um das dritte Bildsignal zu erhalten.

**3.** Verfahren zum Erkennen von Objekten nach Anspruch 2, bei dem der Schritt des Zusammenführens eine Transformation (86) an dem zweiten Bildsignal durchführt.

**4.** Verfahren zum Erkennen von Objekten nach einem beliebigen der Ansprüche 1 bis 3, bei dem das Berechnen (66) einer Salienzkarte das Berechnen einer Vielzahl von Bildmerkmalen aus Merkmalen des Intensitätskontrasts, Farbkontrasts und der Orientierung aufweist.

**5.** Verfahren zum Erkennen von Objekten nach einem beliebigen der Ansprüche 1 bis 4, bei dem das Bestimmen (68) von mindestens einem Bereich von Interesse aus der berechneten Salienzkarte umfasst

    - Bestimmen von Werten lokaler Maxima der berechneten Salienzkarte und Bestimmen von Bereichen von Interesse, wobei jeder Bereich von Interesse auf einem lokalen Maximum der Salienzkarte zentriert ist.

**6.** Verfahren zum Erkennen von Objekten nach einem beliebigen der Ansprüche 1 bis 5, **dadurch gekennzeichnet, dass** ein digitales Bildsignal repräsentativ für ein Standbild ist.

**7.** Verfahren zum Erkennen von Objekten nach einem beliebigen der Ansprüche 1 bis 5, **dadurch gekennzeichnet, dass** ein digitales Bildsignal repräsentativ für einen Videostrom ist.

**8.** System zur Erkennung von Objekten durch Analyse von digitalen Bildsignalen einer Szene, **dadurch gekennzeichnet, dass** es eine Bilderfassungsvorrichtung (2, 20, 30, 40) aufweist, die auf einem Träger (10) montiert ist, der mindestens eine Drehachse aufweist, die geeignet ist, mit einer Verarbeitungseinheit (4) zusammenzuarbeiten, die einen Prozessor umfasst, bei dem:

    - die Erfassungsvorrichtung (2) geeignet ist, ein erstes digitales Bildsignal mit einer ersten Auflösung zu erfassen, die einem breiten Sichtfeld entspricht,
    - die Verarbeitungseinheit (4) aufweist:

        - ein Modul (54) zum Berechnen einer Salienzkarte aus dem ersten digitalen Bildsignal, das vor dem Berechnen einer Salienzkarte ein visuelles Salienzlernen eines Satzes von vorbestimmten Klassen von Objekten von Interesse durchführt, wobei mindestens ein Objektbild jeder Klasse in einer Datenbank gespeichert ist,
        - ein Modul (56) zum Bestimmen mindestens eines Bereichs von Interesse aus der berechneten Salienzkarte,

    - Mittel (12) zum Ausrichten der Bilderfassungsvorrichtung und mindestens eine Kamera zum Erfassen eines zweiten digitalen Bildsignals, das auf den besagten Bereich von Interesse fokussiert ist, mit einer zweiten Auflösung, die höher ist als die erste Auflösung,

    - wobei die Verarbeitungseinheit (4) ein Modul (60) zum Bestimmen einer Klassifizierung von Objekten eines Teils der Szene unter Verwendung des zweiten digitalen Bildsignals aufweist, das angepasst ist, ein Gewinnen eines dritten Bildsignals mit variabler Auflösung, das in einem Mittelbereich das zweite Bildsignal mit zweiter Auflösung und einen peripheren Bereich mit erster Auflösung umfasst, ein Anwenden einer Netzhautbildverarbeitung an dem dritten Bildsignal, um charakteristische Daten von Objekten zu erhalten, die in dem dritten Bildsignal vorhanden sind, und ein Anwenden eines Verfahrens zum Klassifizieren von Objekten auf den charakteristischen Daten aus einem Satz von zuvor gespeicherten Objektklassen, durchzuführen.

**9.** System zur Erkennung von Objekten nach Anspruch 8, bei dem die Bilderfassungsvorrichtung (40) eine verzerrungsgesteuerte Bilderfassungskamera (42) aufweist.

**10.** System zur Erkennung von Objekten nach Anspruch 8, bei dem die Bilderfassungsvorrichtung (2, 20, 30) mindestens eine Schmalfeld-Bildaufnahmekamera (6, 22, 24, 32, 34) und mindestens eine Weitfeld-Bildaufnahmekamera (8, 26, 36, 38) umfasst.

**Claims**

**1.** Method for object recognition, by analysis of digital image signals of a scene, said digital image signals being acquired by an image acquisition device mounted on a support comprising at least one axis of rotation, **characterised in that** it comprises the steps of:

    - acquisition (64) of a first digital image signal of first resolution corresponding to a wide field of vision,
    - calculation (66) of a saliency map from the first digital image signal, comprising a prior step of learning the visual saliency (62) of an assembly of classes of objects of predetermined interest, at least one object image of each class being memorised in a database,
    - determination (68) of at least one zone of interest from the calculated saliency map,
    - orientation (70) of the image acquisition device and acquisition of a second digital image signal focused on said zone of interest, of second resolution greater than the first resolution,
    - determination (72, 74, 76) of a classification of objects of a part of the scene using the second digital image signal, the determination of a classification of objects of the scene comprising the following sub-steps:

- obtaining (72) a third image signal of variable resolution comprising, in a central part, said second image signal of second resolution and a peripheral part of first resolution,
- application (74) of a retinal image processing to said third image signal in order to obtain characteristic data of objects present in said third image signal,
- application (76) of an object classification method on the characteristic data, from an assembly of previously memorised classes of objects.

2. Method for object recognition according to claim 1, in which obtaining a third image signal comprises, after orientation (70) of the image acquisition device, the steps of:

- obtaining an intermediate image signal of first resolution corresponding to a wide field of vision, and
- merging (86, 88) the second image signal of second resolution and said intermediate image signal, in order to obtain said third image signal.

3. Method for object recognition according to claim 2, in which the merging step implements a transformation (86) on the second image signal.

4. Method for object recognition according to any of claims 1 to 3, in which the calculation (66) of a saliency map comprises a calculation of a plurality of image characteristics from characteristics of intensity contrast, of colour contrast and of orientation.

5. Method for object recognition according to any of claims 1 to 4, in which determination (68) of at least one zone of interest from the calculated saliency map comprises

- determination of local maxima values of the calculated saliency map and determination of zones of interest, each zone of interest being centred on a local maximum of the saliency map.

6. Method for object recognition according to any of claims 1 to 5, **characterised in that** a digital image signal is representative of a fixed image.

7. Method for object recognition according to any of claims 1 to 5, **characterised in that** a digital image signal is representative of a video flow.

8. System for object recognition by analysis of digital image signals of a scene, **characterised in that** it comprises an image acquisition device (2, 20, 30, 40) mounted on a support (10) comprising at least one axis of rotation, able to cooperate with a processing unit (4) comprising a processor, in which:

- the acquisition device (2) is able to acquire a first digital image signal of first resolution corresponding to a wide field of vision,
- the processing unit (4) comprises:

- a module (54) for calculation of a saliency map from the first digital image signal, implementing, prior to calculation of a saliency map, learning of the visual saliency of an assembly of classes of objects of predetermined interest, at least one object image of each class being memorised in a database,
- a module (56) for determination of at least one zone of interest from the calculated saliency map,

- means (12) for orientation of the image acquisition device and at least one camera for acquisition of a second digital image signal focused on said zone of interest, of second resolution greater than the first resolution,
- the processing unit (4) comprises a module (60) for determination of a classification of objects of a part of the scene using the second digital image signal, adapted to implement obtaining a third image signal of variable resolution comprising, in a central part, said second image signal of second resolution and a peripheral part of first resolution, an application for retinal image processing to said third image signal in order to obtain characteristic data of objects present in said third image signal, and an application of an object classification method on the characteristic data, from an assembly of previously memorised classes of objects.

9. System for object recognition according to claim 8, in which the image acquisition device (40) comprises a camera (42) for image acquisition with distortion control.

10. System for object recognition according to claim 8, in which the image acquisition device (2, 20, 30) comprises at least one camera for acquisition of narrow-field images (6, 22, 24, 32, 34) and at least one camera for acquisition of wide-field images (8, 26, 36, 38).

FIG.1

FIG.2

FIG.3

FIG.4

-52-    -54-    -56-

4

-58-    -60-

50

FIG.5

$\{O_1, -O_P\}$ → | Apprentissage saillance visuelle | — 62

| Obtention I1 | — 64

| Calcul carte de saillance | — 66

| Détermination zones d'intérêt | — 68

| Orientation vers zone suivante | — 70

| Obtention d'image fusionnée | — 72

| Traitements rétiniens | — 74

| Classification d'objets | — 76

**FIG.6**

82    80

84

## FIG.7

$I_L$    $I_E$

Transformation    86

Fusion    88

$I_F$

## FIG.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2010013917 A1

**Littérature non-brevet citée dans la description**

- **F. MOOSMANN et al.** Learning saliency maps for object categorization. *International Workshop on the Représentation and Use of Prior Knowledge in Vision, ECCV,* 2006

- A Model of Saliency-based Visual Attention for Rapid Scene Analysis. **ITTI et al.** IEEE Transactions on Pattern Analysis and Machine Intelligence. Novembre 1998, 1254-1259
- **L. BREIMAN.** Random Forests. *Machine Learning,* 2001, vol. 45 (1), 5-32